(19) Europäisches Patentamt
European Patent Office
Office européen des brevets

(11) EP 1 544 206 B1

(12) # EUROPÄISCHE PATENTSCHRIFT

(45) Veröffentlichungstag und Bekanntmachung des Hinweises auf die Patenterteilung:
**05.03.2008 Patentblatt 2008/10**

(51) Int Cl.:
***C07F 9/30*** *(2006.01)*

(21) Anmeldenummer: **04028906.8**

(22) Anmeldetag: **07.12.2004**

(54) **Verwendung von Dialkylphosphinsäure-Salze**

Use of salts of dialkylphosphinic acids

Utilisation de sels d'acides dialkylphosphiniques

(84) Benannte Vertragsstaaten:
**AT BE CH DE ES FR GB IT LI NL**

(30) Priorität: **19.12.2003 DE 10359814**

(43) Veröffentlichungstag der Anmeldung:
**22.06.2005 Patentblatt 2005/25**

(73) Patentinhaber: **Clariant Produkte (Deutschland) GmbH**
**65929 Frankfurt am Main (DE)**

(72) Erfinder:
- **Bauer, Harald, Dr.**
  **50170 Kerpen (DE)**
- **Krause, Werner, Dr.**
  **50354 Hürth (DE)**
- **Sicken, Martin, Dr.**
  **51149 Köln (DE)**
- **Weferling, Norbert, Dr.**
  **50354 Hürth (DE)**

(56) Entgegenhaltungen:

| | |
|---|---|
| **EP-A- 1 024 167** | **EP-A- 1 055 676** |
| **EP-A- 1 479 718** | **WO-A-98/39381** |
| **WO-A-99/28327** | **DE-A1- 10 241 373** |

- **WILLIAM C DRINKARD: "Some salts of symmetric phosphinic acids" JOURNAL OF THE AMERICAN CHEMICAL SOCIETY, AMERICAN CHEMICAL SOCIETY, WASHINGTON, DC, US, Bd. 74, Nr. 21, November 1952 (1952-11), Seiten 5520-5521, XP002093391 ISSN: 0002-7863**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 544 206 B1

## Beschreibung

Die Erfindung betrifft Dialkylphosphinsäuresalze und deren Verwendung in Flammschutzmittel-Zusammensetzungen sowie flammgeschützte Polymerformmassen und flammgeschützten Polymer-Formkörper, die diese Dialkylphosphinsäuresalze enthalten.

Dialkylphosphinsäuresalze und Verfahren zu Ihrer Herstellung sind bekannt. So wird in der WO 99/28327 wird ein Verfahren beschrieben, das, ausgehend von Alkalisalzen der hypophosphorigen Säuren, in zwei Stufen zu Phosphinsäuresalzen führt. Diese enthalten Spuren des Lösungsmittels (Essigsäure) als Verunreinigungen im Endprodukt, was bei der vorgesehenen Einarbeitung in Kunststoffe zu unerwünschten Nebeneffekten führt. Des Weiteren enthalten Phosphinsäuresalze nach diesem Stand der Technik wegen der Verwendung von organischen Lösungsmitteln in der ersten Verfahrensstufe unerwünschte telomere Nebenprodukte.

Der vorliegenden Erfindung liegt daher die Aufgabe zugrunde, Dialkylphosphinsäuresalze von bestimmten Metallen mit besonders geringem Gehalt an Restlösungsmittel, insbesondere Essigsäure und telomeren Produkten zur Verfügung zu stellen.

Überraschenderweise wurde gefunden, dass Dialkylphosphinsäuresalze mit besonders geringem Gehalt an Restlösungsmittel (Essigsäure) und telomeren Produkten eine besonders geringe Schädigung des umgebenden Kunststoffs (insbesondere Polymerabbau) bewirken, wenn sie in Kunststoffe eingearbeitet werden.

Die Schädigung des umgebenden Kunststoffs ist anhand der Veränderung der Spezifischen Viskosität (SV) von Lösungen des Polymers vor und nach der Verarbeitung zu beurteilen. Je höher der SV-Wert ist, bzw. je näher beim Wert des unbehandelten Polymers, desto geringer war der Polymerabbau während der Einarbeitung des Flammschutzmittels.

Die Schädigung des umgebenden Kunststoffs ist weiterhin durch den Melt Volume Index zu beurteilen. Dabei wird die Viskosität einer Polymerschmelze mit dem fraglichen Zusatzstoff der Viskosität einer unbehandelten Schmelze gegenübergestellt. Je weniger die Viskosität gegenüber einer unbehandelten Schmelze abfällt, desto günstiger.

Die Erfindung betrifft daher die Verwendung von Dialkylphosphinsäuresalzen der Formel (I)

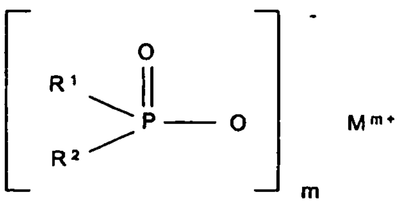

(I)

worin

$R^1$, $R^2$ gleich oder verschieden sind und $C_1$-$C_6$-Alkyl, linear oder verzweigt;
M Mg, Ca, Al, Sb, Sn, Ge, Ti, Fe, Zr, Zn, Ce, Bi, Sr, Mn, Li, Na, K und/oder eine protonierte Stickstoffbase;
m 1 bis 4;

bedeuten und deren Telomeren-Gehalt 0,01 bis 6 Gew.-% beträgt und wobei es sich bei den Telomeren um Ethyl-Butylphosphinsäure-Salze, Butyl-Butylphosphinsäure-Salze, Ethyl-Hexylphosphinsäure-Salze, Butyl-Hexylphosphinsäure-Salze und/oder Hexyl-Hexylphosphinsäure-Salze handelt, als Flammschutzmittel.

Bevorzugt bedeutet M Aluminium, Calcium, Titan, Zink, Zinn oder Zirkonium.

Besonders bevorzugt sind $R^1$, $R^2$ gleich oder verschieden und bedeuten Methyl, Ethyl, n-Propyl, iso-Propyl, n-Butyl, iso-Butyl, tert.-Butyl, n-Pentyl, iso-Pentyl, n-Hexyl und/oder iso-Hexyl.

Bevorzugte Dialkylphosphinsäuresalze sind Aluminiumtrisdiethylphosphinat, Aluminiumtrismethylethylphosphinat, Titanylbisdiethylphosphinat, Titantetrakisdiethylphosphinat, Titanylbismethylethylphosphinat, Titantetrakismethylethylphosphinat, Zinkbisdiethylphosphinat, Zinkbismethylethylphosphinat und Mischungen davon.

Die Erfindung betrifft auch Flammschutzmittel-Zusammensetzungen, die mindestens ein Dialkylphosphinsäuresalz der Formel (I) enthalten.

Bevorzugt enthält die erfindungsgemäße Flammschutzmittelzusammensetzung 50 bis 99,9 Gew.-% mindestens eines Dialkylphosphinsäuresalzes der Formel (I) und 0,1 bis 50 Gew.-% mindestens eines Additivs.

Besonders bevorzugt enthält die erfindungsgemäße Flammschutzmittel-Zusammensetzung 95 bis 70 Gew.-% mindestens eines Diakylphosphinsäuresalzes der Formel (I) und 5 bis 30 Gew.-% mindestens eines Additivs.

Bevorzugt entstammen die Additive aus der Gruppe Melaminphosphat, Dimelaminphosphat, Pentamelamintriphosphat, Trimelamindiphosphat, Tetrakismelamintriphosphat, Hexakismelaminpentaphosphat, Melamindiphosphat,

Melamintetraphosphat, Melaminpyrophosphat, Melaminpolyphosphat, Melampolyphosphat, Melempolyphosphat und/oder Melonpolyphosphat.

Bevorzugt entstammen die Additive auch aus der Gruppe oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin.

Bevorzugt entstammen die Additive aus der Gruppe der Zinkverbindungen wie Zinkoxid, Zinkhydroxid, Zinnoxidhydrat, Zinkcarbonat, Zinkstannat, Zinkhydroxystannat, Zink-Silikat, Zinkphosphat, Zinkborat und/oder Zinkmolybdat.

Bevorzugt entstammen die Additive schließlich auch aus der Gruppe der Carbodiimide und/oder (Poly-)isocyanate, wie Carbonylbiscaprolactam und/oder Styrol-Acryl-Polymere.

Die Erfindung betrifft auch eine flammgeschützte Polymerformmasse, enthaltend mindestens ein Dialkylphosphinsäuresalz der Formel (I) oder mindestens eine erfindungsgemäßen Flammschutzmittelzusammensetzung.

Bevorzugt enthält die flammgeschützte Polymerformmasse 1 bis 50 Gew.-% mindestens eines Dialkylphosphinsäuresalzes der Formel (I) oder mindestens einer erfindungsgemäßen Flammschutzmittelzusammensetzung 1 bis 99 Gew.-% Polymer oder Mischungen derselben,
0 bis 60 Gew.-% Additive und
0 bis 60 Gew.-% Füllstoff.

Bevorzugt entstammen die Polymere aus der Gruppe der thermoplastischen Polymere wie Polyester, Polystyrol oder Polyamid und/oder der duroplastischen Polymere.

Bevorzugt beträgt die Restfeuchte der flammgeschützten Polymerformmasse 0,01 bis 10 Gew.-%, bevorzugt 0,1 bis 1 Gew.-%.

Die Erfindung betrifft auch ein Verfahren zur Herstellung von flammgeschützten Polymerformmassen, dadurch gekennzeichnet, dass die Dialkylphosphinsäuresalze der Formel (I) und/oder die erfindungsgemäßen Flammschutzmittel-Zusammensetzungen mit dem Polymergranulat und evtl. Additiven in einem Mischer vermischt werden und in einem Compoundieraggregat bei höheren Temperaturen in der Polymerschmelze homogenisiert werden und anschließend der homogenisierte Polymerstrang abgezogen, gekühlt und portioniert wird.

Die Erfindung betrifft auch die Verwendung der Dialkylphosphinsäuresalze der Formel (I) und/oder der erfindungsgemäßen Flammschutzmittel-Zusammensetzungen in flammgeschützten Polymer-Formkörpern.

Bevorzugt enthalten die flammgeschützten Polymer-Formkörper, -Filme, -Fäden und -Fasern
1 bis 50 Gew.-% Dialkylphosphinsäuresalze der Formel (I) und/oder erfindungsgemäße Flammschutzmittel-Zusammensetzungen,
1 bis 99 Gew.-% Polymer oder Mischungen derselben
0 bis 60 Gew.-% Additive und
0 bis 60 Gew.-% Füllstoff.

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt beträgt der Telomeren-Gehalt 0,1 bis 5 Gew.-%.

Besonders bevorzugt beträgt der Telomeren-Gehalt 0,2 bis 2,5 Gew.-%.

Bevorzugt handelt es sich bei den Telomeren auch um solche aus der Gruppe $C_2$-Alkyl-$C_4$-Alkyl-Phosphinsäure-Salze, $C_4$-Alkyl-$C_4$-Alkyl-Phosphinsäure-Salze, $C_2$-Alkyl-$C_6$-Alkyl-Phosphinsäure-Salze, $C_4$-Alkyl-$C_6$-Alkyl-Phosphinsäure-Salze, $C_6$-Alkyl-$C_6$-Alkyl-Phosphinsäure-Salze.

Bevorzugt beträgt die Restfeuchte der erfindungsgemäßen Dialkylphosphinsäuresalze 0,01 bis 10 Gew.-%, bevorzugt 0,1 bis 1 Gew.-%.

Bevorzugt beträgt die mittlere Teilchengröße der erfindungsgemäßen Dialkylphosphinsäuresalze 0,1 bis 1000 $\mu$m, besonders bevorzugt 50 bis 500 $\mu$m und insbesondere 10 bis 100 $\mu$m.

Die erfindungsgemäßen Dialkylphosphinsäuresalze haben eine bevorzugte Schüttdichte von 80 bis 800 g/l, besonders bevorzugt 200 bis 700 g/l.

Bevorzugt beträgt die mittlere Teilchengröße der Flammschutzmittelzusammensetzung 0,1 bis 3000 $\mu$m, bevorzugt 0,1 bis 1000 $\mu$m und insbesondere 1 bis 100 $\mu$m.

Bevorzugt enthält die flammgeschützte Polymerformmasse 5 bis 30 Gew.-% mindestens eines Dialkylphosphinsäuresalzes der Formel (I) oder mindestens einer erfindungsgemäßen Flammschutzmittelzusammensetzung,
5 bis 90 Gew.-% Polymer oder Mischungen derselben,
5 bis 40 Gew.-% Additive und
5 bis 40 Gew.-% Füllstoff.

Bevorzugt weist die Polymerformmasse Zylinderform mit kreisförmiger, elliptischer oder unregelmäßiger Grundfläche, Kugelform, Kissenform, Würfelform, Quaderform, Prismenform auf.

Bevorzugt beträgt bei der Zylinderform das Längen-zu-Durchmesser-Verhältnis 1 zu 50 bis 50 zu 1, bevorzugt 1 zu 5 bis 5 zu 1.

Bevorzugt entstammt das Compoundieraggregat aus der Gruppe der Einwellenextruder, Mehrzonenschnecken oder Doppelschneckenextruder. Bevorzugt betragen die Verarbeitungstemperaturen
bei Polystyrol 170 bis 200°C,
Polypropylen 200 bis 300°C,
Polyethylenterephthalat (PET) 250 bis 290°C,
Polybutylenterephthalat (PBT)230 bis 270°C,
Polyamid 6 (PA 6)260 bis 290°C,
Polyamid 6.6 (PA 6.6)260 bis 290°C,
Polycarbonat 280 bis 320°C.

Bevorzugt beträgt die wirksame Schneckenlängen (L) des Extruders (Compoundieraggregat) in Vielfachen des Schneckendurchmessers (D) 4 bis 200D, bevorzugt 10 bis 50D.

Die Erfindung betrifft auch flammgeschützte Polymer-Formkörper, -Filme, -Fäden und -Fasern enthaltend die erfindungsgemäßen Dialkylphosphinsäuresalze und/oder die erfindungsgemäßen Flammschutzmittel-Zusammensetzungen.

Besonders bevorzugt enthalten die flammgeschützten Polymer-Formkörper, -Filme, - Fäden und -Fasern enthaltend
5 bis 30 Gew.-% Dialkylphosphinsäuresalze der Formel (1) und/oder erfindungsgemäße Flammschutzmittel-Zusammensetzungen,
5 bis 90 Gew.-% Polymer oder Mischungen derselben
5 bis 40 Gew.-% Additive und
5 bis 40 Gew.-% Füllstoff.

Bevorzugt betragen bei diesem verfahren die Verarbeitungstemperaturen
bei Polystyrol 200 bis 250 °C,
bei Polypropylen 200 bis 300°C,
bei Polyethylenterephthalat (PET) 250 bis 290°C,
bei Polybutylenterephthalat (PBT) 230 bis 270 °C,
bei Polyamid 6 (PA 6) 260 bis 290 °C,
bei Polyamid 6.6 (PA 6.6) 6.6 260 bis 290 °C,
bei Polycarbonat 280 bis 320°C.

Unter protonierten Stickstoffbasen werden bevorzugt die protonierten Basen von Ammoniak, Melamin, Triethanolamin, insbesondere $NH_4^+$, verstanden. Ebenfalls dazu gehören die protonierten Basen von Melamin, Harnstoff, Biuret, Guanidin, Dodecylguanidin, Biuret, Allantoin, Acetoguanamin, Benzoguanamin, Tolyltriazol, Benzotriazol, 2-Amino-4-methylpyrimidin, Benzylharnstoff, Melamin, Acetylenharnstoff, Hydantoin, Malonsäureamidamidin, Dimethylharnstoff, Diphenylguanidin, 5,5-Diphenylhydantoin, N,N'-Diphenylharnstoff, Ethylen-bis-5-triazon, Glycinanhydrid, Tetramethylharnstoff, Kondensationsprodukte des Melamins z. B. Metern, Melam oder Melon bzw. höher kondensierte Verbindungen dieses Typs.

Die Dialkylphosphinsäuresalze der Formel (I) haben einen bevorzugten Gehalt an Initiatoren-Endgruppen 0,0001 bis 10 mol-%, besonders bevorzugt 0,001 bis 1 mol-%. Initiatoren-Endgruppen können beim Radikal-Kettenabbruch an das letzte Molekül der Radikalkette gebunden bleiben.

Die Dialkylphosphinsäuresalze der Formel (I) haben bevorzugte L-Farbwerte von 85 bis 99,9, besonders bevorzugt 90 bis 98.

Die Dialkylphosphinsäuresalze der Formel (I) haben bevorzugte $\alpha$-Farbwerte von -4 bis +9, besonders bevorzugt -2 bis +6.

Die Dialkylphosphinsäuresalze der Formel (I) haben bevorzugte b-Farbwerte von -2 bis +6, besonders bevorzugt -1 bis +3.

Die Farbwerte werden im System nach Hunter (CIE-LAB-System, Commission Internationale d'Eclairage) angegeben. L-Werte gehen von 0 (schwarz) bis 100 (weiß), a-Werte von -a (grün) bis +a (rot) und b-Werte von -b (blau) bis +b (gelb).

Die erfindungsgemäß bevorzugte Anwendung für die Dialkylphosphinsäuresalze der Formel (I) ist als Flammschutzmittel selbst und/oder in Flammschutzmittel-Zusammensetzungen. Dazu werden sie bevorzugt gemeinsam mit anderen Additiven eingesetzt.

Bevorzugte weitere Additive in solchen Flammschutzmittel-Zusammensetzungen sind z.B. Synergisten wie in DE-A-28 27 867, DE-A-199 33 901, DE-A-196 14 424 oder DE-A-197 34 437 beschrieben.

Erfindungsgemäß werden als Synergisten Melaminphosphat (z.B. ®Melapur MP der Fa. Ciba-DSM Melapur), Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat (z.B. ®Budit 311 der Fa. Budenheim, ®MPP-B der Fa. Sanwa Chemicals), Melaminpolyphosphate, Melampolyphosphate, Melempolyphosphate und/ oder Melonpolyphosphate bevorzugt. Besonders bevorzugt sind Melaminpolyphosphate wie ®Melapur 200/70 der Fa. Ciba-DSM Melapur, ®Budit 3141, 3141 CA und 3141 CB und Melaminpolyphosphat/ Melaminpyrophosphat der Typen 13-1100, 13-1105, 13-1115, MPP02-244 der Fa. Hummel-Croton und PMP-200 der Fa. Nissan.

Weiterhin sind als Synergisten Melaminkondensationsprodukte wie Melam, Melem und/oder Melon bevorzugt.

In einer weiteren Ausführungsform sind als Synergisten Kondensationsprodukte des Melamins oder Umsetzungsprodukte des Melamins mit Phosphorsäure bzw. Umsetzungsprodukte von Kondensationsprodukten des Melamins mit Phosphorsäure sowie Gemische der genannten Produkte bevorzugt. Kondensationsprodukte des Melamins sind z. B. Melem, Melam oder Melon bzw. höher kondensierte Verbindungen dieses Typs sowie Gemische derselben und können z. B. durch ein Verfahren hergestellt werden, wie es in der WO-A-96/16948 beschrieben ist.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen. Beispiele hierfür sind Melaminpolyphosphat, Melampolyphosphat und Melempolyphosphat bzw. gemischte Polysalze, wie sie z.B. in der WO 98/39306 beschrieben sind. Die genannten Verbindungen sind bereits aus der Literatur bekannt und können auch durch andere Verfahren als die direkte Umsetzung mit Phosphorsäure hergestellt werden. Melaminpolyphosphat kann zum Beispiel analog WO 98/45364 hergestellt werden durch die Umsetzung von Polyphosphorsäure und Melamin bzw. analog WO 98/08898 durch die Kondensation von Melaminphosphat bzw. Melaminpyrophosphat.

Erfindungsgemäß sind als Synergisten weiterhin bevorzugt oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat (z.B. ®Melapur MC oder ®Melapur MC XL der Fa. Ciba-DSM Melapur), Harnstoffcyanurat, Dicyandiamid und/oder Guanidin. Erfindungsgemäß sind als Synergisten weiterhin bevorzugt stickstoffhaltige Phosphate der Formeln $(NH_4)_yH_{3-y}PO_4$ bzw. $(NH_4PO_3)_z$, mit y gleich 1 bis 3 und z gleich 1 bis 10.000

Bevorzugt handelt es sich bei den Stickstoffverbindungen um solche der Formeln (III) bis (VIII) oder Gemische davon

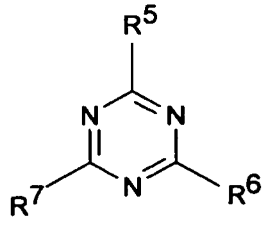

(III)

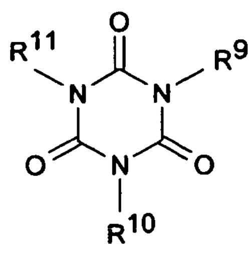

(IV)

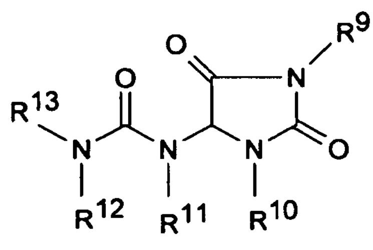

(V)

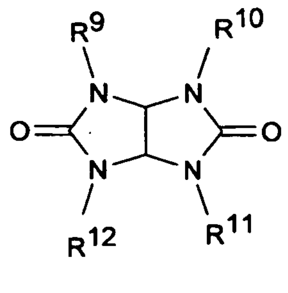

(VI)

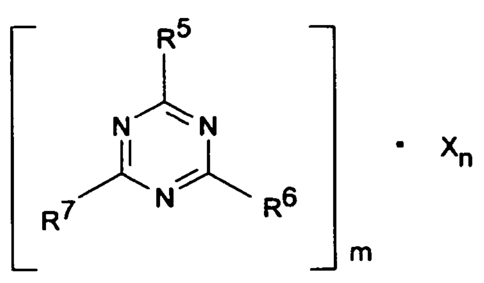

(VII)

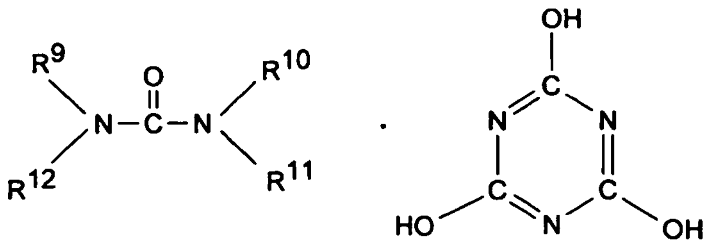 (VIII)

worin

| | |
|---|---|
| $R^5$ bis $R^7$ | Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy, $C_6$-$C_{12}$-Aryl oder -Arylalkyl, $-OR^8$ und $-N(R^8)R^9$, sowie N-alicyclisch oder N-aromatisch, |
| $R^8$ | Wasserstoff, $C_1$-$C_8$-Alkyl, $C_5$-$C_{16}$-Cycloalkyl oder -Alkylcycloalkyl, möglicherweise substituiert mit einer Hydroxy- oder einer $C_1$-$C_4$-Hydroxyalkyl-Funktion, $C_2$-$C_8$-Alkenyl, $C_1$-$C_8$-Alkoxy, -Acyl, -Acyloxy oder $C_6$-$C_{12}$-Aryl oder -Arylalkyl, |
| $R^9$ bis $R^{13}$ | die gleichen Gruppen wie $R^8$ sowie $-O-R^8$, |
| m und n | unabhängig voneinander 1, 2, 3 oder 4, |
| X | Säuren, die Addukte mit Triazinverbindungen (III) bilden können, |

bedeuten.

Bevorzugte weitere Additive in den erfindungsgemäßen Flammschutzmittel-Zusammensetzungen sind z.B. nach EP-A-1 024 167 Sauerstoffverbindungen des Siliciums, Magnesiumverbindungen, z.B. Metallcarbonate von Metallen der zweiten Hauptgruppe des Periodensystems, roter Phosphor, Zink- oder Aluminiumverbindungen.

Bevorzugte weitere Additive in den erfindungsgemäßen Flammschutzmittel-Zusammensetzungen sind Oxide, Hydroxide, Carbonate, Silikate, Borate, Stannate, gemischte Oxid-Hydroxide, Oxid-Hydroxid-Carbonate, Hydroxid-Silikate oder Hydroxid-Borate oder Mischungen dieser Stoffe.

Bevorzugte weitere Additive in den erfindungsgemäßen Flammschutzmittel-Zusammensetzungen sind Magnesiumverbindungen, z.B. Magnesiumoxid, Magnesiumhydroxid, Hydrotalcite, Dihydrotalcit, Magnesium-Carbonate oder Magnesium-Calcium-Carbonate.

Bevorzugte weitere Additive in den erfindungsgemäßen Flammschutzmittel-Zusammensetzungen sind Calciumverbindungen, z.B. Calciumhydroxid, Calciumoxid, Hydrocalumit.

Bevorzugte weitere Additive in den erfindungsgemäßen Flammschutzmittel-Zusammensetzungen sind Zinkverbindungen, z.B. Zinkoxid (z.B. Zinkoxid aktiv), Zinkhydroxid, Zinkoxidhydrat, Zinkcarbonat (z.B. Zinkcarbonat basisch, Zinkcarbonat wasserfrei), -stannat, -hydroxystannat, basisches Zink-Silikat, -phosphat, -borat (z.B. Firebrake ZB, 415, 500 der Fa. Borax), -molybdate (Kemgard 911B, Kemgard 911C der Fa. Sherwin-Williams Company) oder -sulfide.

Bevorzugte weitere Additive in den erfindungsgemäßen Flammschutzmittel-Zusammensetzungen sind Aluminiumverbindungen, z.B. Aluminiumoxid, Aluminiumhydroxid, Böhmit, Gibbsit oder Aluminiumphosphat handelt.

Bevorzugte weitere Additive in den erfindungsgemäßen Flammschutzmittel-Zusammensetzungen sind Manganverbindungen, z.B. Manganoxid, Manganhydroxid.

Bevorzugte weitere Additive in den erfindungsgemäßen Flammschutzmittel-Zusammensetzungen sind Zinnverbindungen, z.B. Zinnoxid.

Bevorzugte weitere Additive in den erfindungsgemäßen Flammschutzmittel-Zusammensetzungen sind in DE-A-199 20 276 (BASF) beschrieben, z.B. aus der Gruppe der Carbodiimide (z.B. ®Stabaxol P der Fa. BASF) und/oder (Poly-) isocyanate (z.B. ®Basonat HI 100 oder ®Vestanat T 1890/100).

Bevorzugte weitere Additive in den erfindungsgemäßen Flammschutzmittel-Zusammensetzungen sind Carbonylbiscaprolactam (Fa Allinco) oder Styrol-Acryl-Polymere (®Joncryl ADR-4357 der Fa. Johnson).

Bevorzugte weitere Additive in den erfindungsgemäßen Flammschutzmittel-Zusammensetzungen kommen aus der Gruppe der sterisch gehinderten Phenole (z.B. Hostanox OSP 1), sterisch gehinderten Amine und Lichtstabilisatoren (z.B. Chimasorb 944, Hostavin-Typen), Phosphonite und Antioxidantien (z.B. Sandostab® P-EPQ der Fa. Clariant) und Trennmittel (Licomont-Typen der Fa. Clariant).

Bevorzugt werden die Dialkylphosphinsäuresalze der Formel (I) in konfektionierter Form in Flammschutzmittel-Zusammensetzungen eingesetzt. Erfindungsgemäße Formen können gecoatet, staubreduziert, kompaktiert, schmelzgranuliert, tropfgranuliert, dispergiert oder sprühgranuliert sein.

Die mittlere Teilchengröße der erfindungsgemäßen Flammschutzmittel-Zusammensetzung beträgt 0,1 bis 3000

μm.

In einer Ausführungsform beträgt die mittlere Teilchengröße der erfindungsgemäßen Flammschutzmittelzusammensetzung 0,1 bis 1000 μm, bevorzugt 1 bis 100 μm.

In einer anderen Ausführungsform beträgt die mittlere Teilchengröße der erfindungsgemäßen Flammschutzmittelzusammensetzung 100 bis 3000 μm, bevorzugt 200 bis 2000 μm.

Die bevorzugte Schüttdichte der erfindungsgemäßen Flammschutzmittelzusammensetzung beträgt 80 bis 1500 g/l, besonders bevorzugt 200 bis 1000 g/l.

In einer Ausführungsform beträgt die bevorzugte Schüttdichte der erfindungsgemäßen Flammschutzmittelzusammensetzungen 80 bis 800 g/l, besonders bevorzugt 200 bis 700 g/l.

In einer anderen Ausführungsform beträgt die bevorzugte Schüttdichte der erfindungsgemäßen Flammschutzmittelzusammensetzungen 200 bis 1500 g/l, bevorzugt 300 bis 1000 g/l.

Insbesondere betrifft die Erfindung die Anwendung der Dialkylphosphinsäuresalze der Formel (I) in flammgeschützten Polymerformmassen enthaltend Polymer. Erfindungsgemäß bevorzugte Polymere sind thermoplastische und/oder duroplastische Polymere.

Erfindungsgemäß einsetzbare Polymere sind duroplastische und thermoplastische Polymere.

Bevorzugt handelt es sich bei den Polymeren um Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE), sowie Mischungen davon.

Bevorzugt handelt es sich bei den Polymeren um Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Bevorzugt handelt es sich bei den Polymeren um Kohlenwasserstoffharze (z.B. $C_5$-$C_9$) inklusive hydrierte Modifikationen davon (z.B. Klebrigmacherharze) und Mischungen von Polyalkylenen und Stärke.

Bevorzugt handelt es sich bei den Polymeren um Polystyrol (Polystyrol 143E (BASF), Poly-(p-methylstyrol), Poly-(alpha-methylstyrol).

Bevorzugt handelt es sich bei den Polymeren um Copolymere von Styrol oder alpha-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Blockcopolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den Polymeren um Pfropfcopolymere von Styrol oder alpha-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z.B. als so genannte ABS-, MBS-, ASA- oder AES-Polymere bekannt sind.

Bevorzugt handelt es sich bei den Polymeren um Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

Bevorzugt handelt es sich bei den Polymeren um Polymere, die sich von alpha-, beta-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile und Copolymere der genannten Monomeren untereinander oder mit anderen ungesättigten Monomeren, wie z.B. AcrylnitrilButadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

Bevorzugt handelt es sich bei den Polymeren um Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit Olefinen.

Bevorzugt handelt es sich bei den Polymeren um Homo- und Copolymere von cyclischen Ethern, wie Polyalkylenglykole, Polyethylenoxyd, Polypropylenoxyd oder deren Copolymere mit Bisglycidylethern.

Bevorzugt handelt es sich bei den Polymeren um Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.

Bevorzugt handelt es sich bei den Polymeren um Polyphenylenoxide und -sulfide und deren Mischungen mit Styrolpolymeren oder Polyamiden.

Bevorzugt handelt es sich bei den Polymeren um Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2/12, Polyamid 4 (Poly-4-aminobuttersäure, Nylon 4, Fa. DuPont), Polyamid 4/6 (Poly(tetramethylen-adipamid), Poly-(tetramethylen-adipinsäurediamid), Nylon 4/6, Fa. DuPont), Polyamid 6 (Polycaprolactam, Poly-6-aminohexansäure, Nylon 6, Fa. DuPont, Akulon K122, Fa. DSM; Zytel 7301, Fa. DuPont; Durethan B 29, Fa. Bayer), Polyamid 6/6 ((Poly(N,N'-hexamethyleneadipinediamid), Nylon 6/6, Fa. DuPont , Zytel 101, Fa. DuPont; Durethan A30, Durethan AKV, Durethan AM, Fa. Bayer; Ultramid A3, Fa BASF), Polyamid 6/9 (Poly(hexamethylen nonanediamid), Nylon 6/9, Fa. DuPont), Polyamid 6/10 (Poly(hexamethylen sebacamid), Nylon 6/10, Fa. DuPont), Polyamid 6/12 (Poly(hexamethylene dodecanediamid), Nylon 6/12, Fa. DuPont), Polyamid 6/66 (Poly(hexamethylene adipamide-cocaprolactam), Nylon 6/66, Fa. DuPont), Polyamid 7 (Poly-7-aminoheptansäure, Nylon 7, Fa. DuPont), Polyamid 7,7 (Polyheptamethylenpimelamid, Nylon 7,7, Fa. DuPont), Polyamid 8 (Poly-8-aminooctansäure, Nylon 8, Fa. DuPont), Polyamid 8,8 (Polyoctamethylensuberamid, Nylon 8,8, Fa. DuPont), Polyamid 9 (Poly-9-aminononansäure, Nylon 9, Fa. DuPont), Polyamid 9,9 (Polynonamethylenazelamid, Nylon 9,9, Fa. DuPont), Polyamid 10 (Poly-10-amino-decansäure, Nylon 10, Fa. DuPont), Polyamid 10,9 (Poly(decamethylenazelamid), Nylon 10,9, Fa. DuPont), Polyamid 10,10 (Polydecamethylensebacamid, Nylon 10,10, Fa. DuPont), Polyamid 11 (Poly-11-aminoundecansäure, Nylon 11, Fa. DuPont), Polyamid 12 (Polylauryllactam, Nylon 12, Fa. DuPont, Grillamid L20, Fa. Ems Chemie), aromatische Polyamide ausgehend von m-Xylol, Diamin und Adipinsäure; Polyamide, hergestellt aus Hexamethylendiamin und Iso- und/oder Terephthalsäure (Polyhexamethylenisophthalamid Polyhexamethylenterephthalamid) und gegebenenfalls einem Elastomer als Modifikator, z.B. Poly-2,4,4-trimethylhexamethylenterephthalamid oder Poly-m-phenylenisophthalamid. Blockcopolymere der vorstehend genannten Polyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Bevorzugt handelt es sich bei den Polymeren um Polyharnstoffe, Polyimide, Polyamidimide, Polyetherimide, Polyesterimide, Polyhydantoine und Polybenzimidazole.

Bevorzugt handelt es sich bei den Polymeren um Polyester, die sich von Dicarbonsäuren und Dialkoholen und/oder von Hydroxycarbonsäuren oder den entsprechenden Lactonen ableiten, wie Polyethylenterephthalat, Polybutylenterephthalat (Celanex 2500, Celanex 2002, Fa Celanese; Ultradur, FA. BASF), Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.

Bevorzugt handelt es sich bei den Polymeren um Polycarbonate und Polyestercarbonate.

Bevorzugt handelt es sich bei den Polymeren um Polysulfone, Polyethersulfone und Polyetherketone.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

Bevorzugt handelt es sich bei den Polymeren um trocknende und nicht-trocknende Alkydharze.

Bevorzugt handelt es sich bei den Polymeren um ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

Bevorzugt handelt es sich bei den Polymeren um vernetzbare Acrylharze, die sich von substituierten Acrylsäureestern ableiten, wie z.B. von Epoxyacrylaten, Urethanacrylaten oder Polyester-acrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugt handelt es sich bei den Polymeren um vernetzte Epoxidharze, die sich von aliphatischen, cycloaliphatischen, heterocyclischen oder aromatischen Glycidylverbindungen ableiten, z.B. Produkte von Bisphenol-A-diglycidylethern, Bisphenol-F-diglycidylethern, die mittels üblichen Härtern wie z.B. Anhydriden oder Aminen mit oder ohne Beschleunigern vernetzt werden.

Bevorzugt handelt es sich bei den Polymeren um Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

Erfindungsgemäß einsetzbare Compoundieraggregate sind Einwellenextruder bzw. Einschneckenextruder z.B. der Fa. Berstorff GmbH, Hannover und oder der Fa. Leistritz, Nürnberg.

Erfindungsgemäß einsetzbare Compoundieraggregate sind Mehrzonenschnecken-Extruder mit Dreizonenschnecken und/oder Kurzkompressionsschnecken.

Erfindungsgemäß einsetzbare Compoundieraggregate sind auch Ko-Kneter z.B. von Fa. Coperion Buss Compounding Systems, CH-Pratteln, z.B. MDK/E46-11 D und/oder Laborkneter (MDK 46 der Firma Buss, Schweiz mit L=11D).

Erfindungsgemäß einsetzbare Compoundieraggregate sind Doppelschneckenextruder z.B. der Fa. Coperion Werner & Pfleiderer GmbH & Co. KG, Stuttgart (ZSK 25, ZSK30, ZSK 40, ZSK 58, ZSK MEGAcompounder 40, 50, 58, 70, 92, 119, 177, 250, 320, 350, 380) und/oder der Fa. Berstorff GmbH, Hannover, Leistritz Extrusionstechnik GmbH, Nürnberg.

Erfindungsgemäß einsetzbare Compoundieraggregate sind Ring-Extruder z.B. der Fa. 3+Extruder GmbH, Laufen mit einem Ring von drei bis zwölf kleinen Schnecken, die um einem statischen Kern rotieren und/oder Planetwalzenextruder z.B. der Fa.

Entex, Bochum und/oder Entgasungs-Extruder und/oder Kaskadenextruder und/oder Maillefer-Schecken.

Erfindungsgemäß einsetzbare Compoundieraggregate sind Compounder mit gegenläufiger Doppelschnecke z.B. Compex 37- bzw. -70-Typen der Fa. Krauss-Maffei Berstorff.

Erfindungsgemäße wirksame Schneckenlängen sind bei Einwellenextrudern bzw. Einschneckenextrudern 20 bis 40D.

Erfindungsgemäße wirksame Schneckenlängen (L) bei Mehrzonenschneckenextudern sind z.B. 25D mit Einzugzone (L=10D), Übergangszone (L=6D), Ausstoßzone (L=9D).

Erfindungsgemäßen wirksame Schneckenlängen bei Doppelschneckenextrudern sind 8 bis 48D.

Die flammgeschützte Polymerformmasse liegt bevorzugt in Granulatform (Compound) vor. Das Granulat hat bevorzugt Zylinderform mit kreisförmiger, elliptischer oder unregelmäßiger Grundfläche, Kugelform, Kissenform, Würfelform, Quaderform, Prismenform.

Das Längen-zu-Durchmesser-Verhältnis des Granulates beträgt 1 zu 50 bis 50 zu 1, bevorzugt 1 zu 5 bis 5 zu 1.

Das Granulat hat bevorzugt einen Durchmesser von 0,5 bis 15 mm, besonders bevorzugt von 2 bis 3 mm und bevorzugt eine Länge von 0,5 bis 15 mm, besonders bevorzugt von 2 bis 5 mm. Das erhaltene Granulat wird z.B. 10 h bei 90°C im Umluftofen getrocknet.

Erfindungsgemäß sind die SV-Zahlen von erfindungsgemäß flammgeschützten Polymerformmassen auf Basis Polybutylenterephthalat 800 bis 1400, bevorzugt 900 bis 1300 und besonders bevorzugt 1000 bis 1200.

Erfindungsgemäß sind Melt Volume Indizes von erfindungsgemäß flammgeschützten Polymerformmassen auf Basis von Polyamid von 0 bis 15 bevorzugt, von 3 bis 12 besonders bevorzugt.

Die erfindungsgemäßen flammgeschützten Polymerformmassen werden erfindungsgemäß weiter zur Erzeugung von Polymer-Formkörpern verwendet.

Die erfindungsgemäßen flammgeschützten Polymerformmassen eignen sich zur Herstellung von Fasern, Folien und Formkörpern, insbesondere für Anwendungen im Elektro- und Elektronikbereich.

Erfindungsgemäß bevorzugt ist die Anwendung der erfindungsgemäßen flammgeschützten Polymer-Formkörpern als Lampenteile wie Lampenfassungen und -halterungen, Stecker und Steckerleisten, Spulenkörper, Gehäuse für Kondensatoren oder Schaltschütze sowie Sicherungsschalter, Relaisgehäuse und Reflektoren.

Melt Volume Index

Die Fließfähigkeit der Formmassen wurde durch Ermittlung des Melt Volume Index (MVR) bei 275°C/2,16 kg bestimmt. Ein starker Anstieg des MVR-Wertes deutet auf einen Polymerabbau hin.

Bestimmung der SV-Zahl (Spezifische Viskosität)

Eine solche dimensionslose Kennzahl zur Beurteilung der Verträglichkeit eines Additivs in einer Polymer-Formulierung ist die spezifische Viskosität (SV-Wert). Diese leitet sich aus der Bestimmung der Viskosität einer Lösung des Polymers in einem Lösungsmittel her. Dabei wird die Viskosität der Polymerlösung zu der Viskosität des reinen Lösungsmittels ins Verhältnis gesetzt.
0,5 g der Polymerprobe (z.B. PBT) wurden mit 50 ml Dichloressigsäure (LM) in einen 250 ml Erlenmeyerkolben mit Schliffstopfen eingewogen. Die Probe wurde unter Rühren bei 25°C über einen Zeitraum von 16h gelöst. Die Lösung wird über eine G1-Glasfritte filtriert. 20 ml der Lösung wurden in die Kapillare gefüllt, in das (Ubbelohde-) Kapillarviskosimeter eingehängt und auf 25°C temperiert. Der SV-Wert errechnet sich nach der Formel:

$$\text{SV-Wert}=100*[\text{Durchlaufzeit (Probenlösung)}/\text{Durchlaufzeit (LM)}-1].$$

Statt Dichloressigsäure kann für Polyethylenterephthalat und Polybutylenterephtalat auch ein Gemisch von Phenol und 1,2-Dichlorbenzol (1:1, w/w) oder m-Kresol eingesetzt werden. Für Polyamid können Schwefelsäure, Ameisensäure oder m-Kresol verwendet werden.
Herstellung, Verarbeitung und Prüfung von flammgeschützten Kunststoffformmassen und Kunststoff-Formkörpern
Die Flammschutzkomponenten wurden mit dem Polymergranulat und evtl. Additiven vermischt und auf einem Doppelschneckenextruder (Typ Leistritz LSM 30/34) bei Temperaturen von 230 bis 260°C (PBT-GV) bzw. von 260 bis 280°C (PA 66-GV) eingearbeitet. Der homogenisierte Polymerstrang wurde abgezogen, im Wasserbad gekühlt und anschließend granuliert.
Nach ausreichender Trocknung wurden die Formmassen auf einer Spritzgießmaschine (Typ Aarburg Allrounder) bei Massetemperaturen von 240 bis 270°C (PBT-GV) bzw. von 260 bis 290°C (PA 66-GV) zu Prüfkörpern verarbeitet.
An Prüfkörpern aus jeder Mischung wurden die Brandklasse UL 94 (Underwriter Laboratories) an Probekörpern der Dicke 1,5 mm bestimmt.
Nach UL 94 ergeben sich folgende Brandklassen:
V-0 kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
V-1 kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0
V-2 Zündung der Watte durch brennendes Abtropfen, übrige Kriterien wie bei V-1
nicht klassifizierbar (nkl) erfüllt nicht die Brandklasse V-2.
Die Erfindung wird durch die nachstehenden Beispiele näher erläutert.

Beispiel 1 Vergleich

Es wird zunächst ein Dialkylphosphinsäure-Aluminiumsalz hergestellt. Dazu wurden 2,2 kg (20,7 Mol) Natriumhypophosphit-1-hydrat in 8 kg (7,62 l) Essigsäure gelöst und in einem 16-l-Doppelmantel-Druckreaktor aus Stahl-Emaille vorgelegt. Nach Aufheizen der Reaktionsmischung auf 85°C wurde über ein auf 5 bar eingestelltes Reduzierventil Ethylen bis zur Sättigung in den Reaktor eingeleitet. Die Reaktion wurde unter ständigem Rühren durch Zudosieren einer Lösung von 56 g (1 Mol-%) 2,2'-Azobis(2-amidinopropan)dihydrochlorid in 250 ml Wasser gestartet und über die Radikalstarter-Dosier-Geschwindigkeit so gesteuert, dass die Reaktionstemperatur im Reaktor bei einer Manteltemperatur von 80°C unter ständiger Zufuhr von Ethylen bei einem mittleren Druck von etwa 5 bar nicht über 95°C stieg. Die Dosierzeit betrug insgesamt 3 Stunden. Danach ließ man noch 3 h bei 85°C nachreagieren. Der Reaktor wurde entspannt und auf Raumtemperatur abgekühlt. Die Gesamt-Auswaage betrug 11,7 kg. Dies entspricht einer Ethylen-Aufnahme von 1,2 kg (100 % der Theorie).
800 g der erhaltenen Mischung aus hauptsächlich Diethylphosphinsäure-Na-Salz wurden in 2500 ml Essigsäure gelöst und anschließend 38 g (0,48 Mol) Aluminiumhydroxid zugegeben. Dann wurde für etwa 4 Stunden unter Rückfluss erhitzt, abgekühlt und abfiltriert. Der erhaltene Feststoff wurde zuerst mit 1 Liter Eisessig, dann mit 1 Liter dest. Wasser und zuletzt mit 500 ml Aceton gewaschen, und dann bei 130°C im Vakuum getrocknet.
Das Produkt hat folgende Zusammensetzung:

Diethylphosphinsäure-Al-Salz: 87,2 Mol-%

Ethylbutylphosphinsäure-Al-Salz: 11,9 Mol-%
Ethylphosphonsäure-Al-Salz: 0,9 Mol-%
Rest-Acetat: 0,88 Gew.-%

Beispiel 2 Vergleich

Es wird zunächst ein Dialkylphosphinsäure-Aluminiumsalz hergestellt. Dazu wurden ein Gemisch von 2,64 kg (20 Mol) einer 50 %igen wässrigen Lösung von hypophosphorigen Säure und 7 kg Essigsäure in einem 16-L-Doppelmantel Druckreaktor aus Stahl-Emaille vorgelegt. Nach Aufheizen der Reaktionsmischung auf 100°C wurde über ein auf 5 bar eingestelltes Reduzierventil Ethylen bis zur Sättigung in den Reaktor eingeleitet. Über einen Zeitraum von 6 h wurde unter ständigem Rühren bei einem Ethylendruck von 5 bar und einer Temperatur von 100-105°C eine Lösung von 56 g 2,2'-Azobis(N,N'-dimethylenisobutyramidin)-dihydrochlorid in 500 g Essigsäure gleichmäßig zudosiert. Nach einer Nachreaktionszeit von 1 h, Entspannung des Reaktors und Abkühlung auf Raumtemperatur wurde die erhaltene Lösung wurde am Rotationsverdampfer weitestgehend vom Lösungsmittel Essigsäure befreit und anschließend mit 10 l Wasser versetzt. Innerhalb von einer Stunde wurden 4500 g (3,5 Mol) einer 46 %igen wässrigen Lösung von $Al_2(SO_4)_3 \cdot 14\ H_2O$ zugefügt. Anschließend wurde der erhaltene Feststoff abfiltriert, nacheinander 2 mal mit je 2 l Wasser gewaschen und bei 130°C im Vakuum getrocknet.

Das Produkt hat folgende Zusammensetzung:

Diethylphosphinsäure-Al-Salz: 90,8 Mol-%
Ethylbutylphosphinsäure-Al-Salz: 8,4 Mol-%
Ethylphosphonsäure-Al-Salz: 0,8 Mol-%
Rest-Acetat: 0,45 Gew.-%

Beispiel 3

Es wird zunächst ein Dialkylphosphinsäure-Aluminiumsalz hergestellt. Dazu wurden 1500 g (14 Mol) Natriumhypophosphit-Monohydrat wurden in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 6 bar eingestelltes Reduzierventil Ethylen bis zur Sättigung in den Reaktor eingeleitet. Über einen Zeitraum von 6 h wurde unter ständigem Rühren bei einem Ethylendruck von 6 bar und einer Temperatur von 100-110°C eine Lösung von 17 g (0,5 Mol-%) Natriumperoxodisulfat in 300 g Wasser gleichmäßig zudosiert. Nach einer Nachreaktionszeit von 1 h, Entspannung des Reaktors und Abkühlung auf ca. 90°C wurde innerhalb von 60 min 3000 g (4,67 Mol Aluminium) einer 46 %igen wässrigen Lösung von $Al_2(SO_4)_3 \cdot 14\ H_2O$ zugefügt. Anschließend wurde der erhaltene Feststoff abfiltriert, mit 2 l heißem Wasser gewaschen und bei 130°C im Vakuum getrocknet.

Das Produkt hat folgende Zusammensetzung:

Diethylphosphinsäure-Al-Salz: 98,6 Mol-%
Ethylbutylphosphinsäure-Al-Salz: 0,9 Mol-%
Ethylphosphonsäure-Al-Salz: 0,5 Mol-%
Rest-Acetat: 0 Gew.-%

Beispiel 4

Wie in Beispiel 3 wird zunächst ein Dialkylphosphinsäure-Aluminiumsalz hergestellt. Das Produkt hat folgende Zusammensetzung:

Diethylphosphinsäure-Al-Salz: 96,5 Mol-%
Ethylbutylphosphinsäure-Al-Salz: 2,7 Mol-%
Ethylphosphonsäure-Al-Salz: 0,8 Mol-%
Rest-Acetat: 0 Gew.-%

Beispiel 5

Es wird zunächst ein Dialkylphosphinsäure-Aluminiumsalz hergestellt. Dazu wurden 1500 g (14 Mol) Natriumhypophosphit-Monohydrat in 7,5 kg Wasser gelöst und in einem 16-L-Doppelmantel Druckreaktor aus Stahl-Emaille vorgelegt. Nach Aufheizen der Reaktionsmischung auf 100°C wurde über ein auf 20 bar eingestelltes Reduzierventil Ethylen bis zur Sättigung in den Reaktor eingeleitet. Über einen Zeitraum von 6 h wurde unter ständigem Rühren bei

einem Ethylendruck von 20 bar und einer Temperatur von 100-110°C eine Lösung von 32 g (1 Mol-%) Ammoniumperoxodisulfat in 300 g Wasser gleichmäßig zudosiert. Nach einer Nachreaktionszeit von 1 h, Entspannung des Reaktors und Abkühlung auf ca. 90°C wurde innerhalb von 60 min 3000 g (4,67 Mol Aluminium) einer 46%-igen wässrigen Lösung von $Al_2(SO_4)_3 \cdot 14\,H_2O$ zugefügt. Anschließend wurde der erhaltene Feststoff abfiltriert, mit 2 l heißem Wasser gewaschen und bei 130°C im Vakuum getrocknet.

Das Produkt hat folgende Zusammensetzung:

Diethylphosphinsäure-Al-Salz: 93,9 Mol-%
Ethylbutylphosphinsäure-Al-Salz: 5,5 Mol-%
Ethylphosphonsäure-Al-Salz: 0,6 Mol-%
Rest-Acetat: 0 Gew.-%

Beispiel 6

Gemäß der allgemeinen Vorschrift "Herstellung, Verarbeitung und Prüfung von flammgeschützten Kunststoffformmassen und Kunststoff-Formkörpern" wird eine Mischung von 100 Gew.-% Polybutylenterephtalat 1 auf einem Doppelschneckenextruder bei 230 bis 260 °C zu einer Polymerformmasse compoundiert. Nach Trocknung werden die Formmassen auf einer Spritzgießmaschine bei Massetemperaturen von 240 bis 270 °C zu Polymerformkörpern verarbeitet. Es wird eine Viskositätszahl von 1072 bestimmt. Der Prüfkörper ist nach UL-94 nicht klassifizierbar.

Beispiel 7

Gemäß der allgemeinen Vorschrift "Herstellung, Verarbeitung und Prüfung von flammgeschützten Kunststoffformmassen und Kunststoff-Formkörpern" wird eine Mischung von 25 Gew.-% Produkt aus Beispiel 1 und 75 Gew.-% Polybutylenterephtalat 1 auf einem Doppelschnecken-Extruder bei 230 bis 260°C zu einer flammgeschützten Polymerformmasse compoundiert. Nach Trocknung werden die Formmassen auf einer Spritzgießmaschine bei Massetemperaturen von 240 bis 270 °C zu flammgeschützten Polymerformkörpern verarbeitet. Es wird eine Viskositätszahl von 719 bestimmt. Der Prüfkörper erlangt nach UL-94 eine V-2 Klassifikation.

Beispiel 8

Gemäß der allgemeinen Vorschrift "Herstellung, Verarbeitung und Prüfung von flammgeschützten Kunststoffformmassen und Kunststoff-Formkörpern" wird eine Mischung von 25 Gew.-% Produkt aus Beispiel 2 und 75 Gew.-% Polybutylenterephtalat 1 auf einem Doppelschnecken-Extruder bei 230 bis 260°C zu einer flammgeschützten Polymerformmasse compoundiert. Nach Trocknung werden die Formmassen auf einer Spritzgießmaschine bei Massetemperaturen von 240 bis 270°C zu flammgeschützten Polymerformkörpern verarbeitet. Es wird eine Viskositätszahl von 758 bestimmt. Der Prüfkörper erlangt nach UL-94 eine V-2 Klassifikation.

Beispiel 9

Gemäß der allgemeinen Vorschrift "Herstellung, Verarbeitung und Prüfung von flammgeschützten Kunststoffformmassen und Kunststoff-Formkörpern" wird eine Mischung von 25 Gew.-% Produkt aus Beispiel 3 und 75 Gew.-% Polybutylenterephtalat 1 auf einem Doppelschnecken-Extruder bei 230 bis 260°C zu einer flammgeschützten Polymerformmasse compoundiert. Nach Trocknung werden die Formmassen auf einer Spritzgießmaschine bei Massetemperaturen von 240 bis 270°C zu flammgeschützten Polymerformkörpern verarbeitet. Es wird eine Viskositätszahl von 1023 bestimmt. Der Prüfkörper erlangt nach UL-94 eine V-0 Klassifikation.

Beispiel 10

Gemäß der allgemeinen Vorschrift "Herstellung, Verarbeitung und Prüfung von flammgeschützten Kunststoffformmassen und Kunststoff-Formkörpern" wird eine Mischung von 25 Gew.-% Produkt aus Beispiel 4 und 75 Gew.-% Polybutylenterephtalat 1 auf einem Doppelschnecken-Extruder bei 230 bis 260°C zu einer flammgeschützten Polymerformmasse compoundiert. Nach Trocknung werden die Formmassen auf einer Spritzgießmaschine bei Massetemperaturen von 240 bis 270°C zu flammgeschützten Polymerformkörpern verarbeitet. Es wird eine Viskositätszahl von 1034 bestimmt. Der Prüfkörper erlangt nach UL-94 eine V-0 Klassifikation.

Beispiel 11

Gemäß der allgemeinen Vorschrift "Herstellung, Verarbeitung und Prüfung von flammgeschützten Kunststoffformmassen und Kunststoff-Formkörpern" wird eine Mischung von 25 Gew.-% Produkt aus Beispiel 5 und 75 Gew.-% Polybutylenterephtalat 1 auf einem Doppelschnecken-Extruder bei 230 bis 260°C zu einer flammgeschützten Polymerformmasse compoundiert. Nach Trocknung werden die Formmassen auf einer Spritzgießmaschine bei Massetemperaturen von 240 bis 270°C zu flammgeschützten Polymerformkörpern verarbeitet. Es wird eine Viskositätszahl von 995 bestimmt. Der Prüfkörper erlangt nach UL-94 eine V-0 Klassifikation.

Beispiel 12

Gemäß der allgemeinen Vorschrift "Herstellung, Verarbeitung und Prüfung von flammgeschützten Kunststoffformmassen und Kunststoff-Formkörpern" wird eine Mischung von 12 Gew.-% Produkt aus Beispiel 1, 6 Gew.-% Melamincyanurat, 52 Gew.-% Polybutylenterephtalat 2 und 30 Gew.-% Glasfasern 1 auf einem Doppelschnecken-Extruder bei 230 bis 260°C zu einer flammgeschützten Polymerformmasse compoundiert. Nach Trocknung werden die Formmassen auf einer Spritzgießmaschine bei Massetemperaturen von 240 bis 270°C zu flammgeschützten Polymerformkörpern verarbeitet. Es wird eine Viskositätszahl von 716 bestimmt. Der Prüfkörper erlangt nach UL-94 eine V-1 Klassifikation.

Beispiel 13

Gemäß der allgemeinen Vorschrift "Herstellung, Verarbeitung und Prüfung von flammgeschützten Kunststoffformmassen und Kunststoff-Formkörpern" wird eine Mischung von 12 Gew.-% Produkt aus Beispiel 3, 6 Gew.-% Melamincyanurat, 52 Gew.-% Polybutylenterephtalat 2 und 30 Gew.-% Glasfasern 1 auf einem Doppelschnecken-Extruder bei 230 bis 260°C zu einer flammgeschützten Polymerformmasse compoundiert. Nach Trocknung werden die Formmassen auf einer Spritzgießmaschine bei Massetemperaturen von 240 bis 270°C zu flammgeschützten Polymerformkörpern verarbeitet. Es wird eine Viskositätszahl von 1005 bestimmt. Der Prüfkörper erlangt nach UL-94 eine V-0 Klassifikation.

Beispiel 14

Gemäß der allgemeinen Vorschrift "Herstellung, Verarbeitung und Prüfung von flammgeschützten Kunststoffformmassen und Kunststoff-Formkörpern" wird eine Mischung von 70 Gew.-% Polyamid 6.6 und 30 Gew.-% Glasfasern 1 auf einem Doppelschnecken-Extruder bei 260 bis 280°C zu einer Polymerformmasse compoundiert. Nach Trocknung werden die Formmassen auf einer Spritzgießmaschine bei Massetemperaturen von 260 bis 290°C zu Polymerformkörpern verarbeitet. Es wird ein Melt Volume Index von 5,8 $cm^3$/min bestimmt. Der Prüfkörper ist nach UL-94 nicht klassifizierbar.

Beispiel 15 Vergleich

Gemäß der allgemeinen Vorschrift "Herstellung, Verarbeitung und Prüfung von flammgeschützten Kunststoffformmassen und Kunststoff-Formkörpern" wird eine Mischung von 11,4 Gew.-% Produkt aus Beispiel 1, 5,7 Gew.-% Melaminpolyphosphat, 0,9 Gew.-% Zinkborat, 52 Gew.-% Polyamid 6.6 und 30 Gew.-% Glasfasern 1 auf einem Doppelschnecken-Extruder bei 260 bis 280°C zu einer flammgeschützten Polymerformmasse compoundiert. Nach Trocknung werden die Formmassen auf einer Spritzgießmaschine bei Massetemperaturen von 260 bis 290 °C zu flammgeschützten Polymerformkörpern verarbeitet. Es wird ein Melt Volume Index von 16,7 $cm^3$/min bestimmt. Der Prüfkörper erlangt nach UL-94 eine V-2 Klassifikation.

Beispiel 16

Gemäß der allgemeinen Vorschrift "Herstellung, Verarbeitung und Prüfung von flammgeschützten Kunststoffformmassen und Kunststoff-Formkörpern" wird eine Mischung von 11,4 Gew.-% Produkt aus Beispiel 3, 5,7 Gew.-% Melaminpolyphosphat, 0,9 Gew.-% Zinkborat, 52 Gew.-% Polyamid 6.6 und 30 Gew.-% Glasfasern 1 auf einem Doppelschnecken-Extruder bei 260 bis 280°C zu einer flammgeschützten Polymerformmasse compoundiert. Nach Trocknung werden die Formmassen auf einer Spritzgießmaschine bei Massetemperaturen von 260 bis 290°C zu flammgeschützten Polymerformkörpern verarbeitet. Es wird ein Melt Volume Index von 4,1 $cm^3$/min bestimmt. Der Prüfkörper erlangt nach UL-94 eine V-0 Klassifikation.

Beispiel 17

Gemäß der allgemeinen Vorschrift "Herstellung, Verarbeitung und Prüfung von flammgeschützten Kunststoffformmassen und Kunststoff-Formkörpern" wird eine Mischung von 11,4 Gew.-% Produkt aus Beispiel 4, 5,7 Gew.-% Melaminpolyphosphat, 0,9 Gew.-% Zinkoxid, 52 Gew.-% Polyamid 6.6 und 30 Gew.-% Glasfasern 1 auf einem Doppelschnecken-Extruder bei 260 bis 280°C zu einer flammgeschützten Polymerformmasse compoundiert. Nach Trocknung werden die Formmassen auf einer Spritzgießmaschine bei Massetemperaturen von 260 bis 290°C zu flammgeschützten Polymerformkörpern verarbeitet. Es wird einMelt Volume Index von 5,6 $cm^3$/min bestimmt. Der Prüfkörper erlangt nach UL-94 eine V-0 Klassifikation.

Beispiel 18

Gemäß der allgemeinen Vorschrift "Herstellung, Verarbeitung und Prüfung von flammgeschützten Kunststoffformmassen und Kunststoff-Formkörpern" wird eine Mischung von 12 Gew.-% Produkt aus Beispiel 4, 6 Gew.-% Melaminpolyphosphat, 52 Gew.-% Polyamid 6 und 30 Gew.-% Glasfasern 2 auf einem Doppelschnecken-Extruder bei 260 bis 280°C zu einer flammgeschützten Polymerformmasse compoundiert. Nach Trocknung werden die Formmassen auf einer Spritzgießmaschine bei Massetemperaturen von 260 bis 290°C zu flammgeschützten Polymerformkörpern verarbeitet. Es wird ein Melt Volume Index von 4,9 $cm^3$/min bestimmt. Der Prüfkörper erlangt nach UL-94 eine V-0 Klassifikation.

Beispiel 19

Gemäß der allgemeinen Vorschrift "Herstellung, Verarbeitung und Prüfung von flammgeschützten Kunststoffformmassen und Kunststoff-Formkörpern" wird eine Mischung von 30 Gew.-% Produkt aus Beispiel 4, und 70 Gew.-% Polystyrol auf einem Doppelschnecken-Extruder bei 170°C zu einer flammgeschützten Polymerformmasse compoundiert. Nach Trocknung werden die Formmassen auf einer Spritzgießmaschine bei Massetemperaturen von 200 bis 250°C zu flammgeschützten Polymerformkörpern verarbeitet. Der Prüfkörper erlangt nach UL-94 eine V-0 Klassifikation.

Verwendete Chemikalien

| | |
|---|---|
| Melaminpolyphosphat | Melapur 200/70, Fa. Ciba SC |
| Melamincyanurat | Melapur MC, Fa. Ciba SC |
| Zinkborat | Firebrake 500, Fa. Borax |
| Zinkoxid | Fa. Rheinchemie |
| Polybutylenterephtalat 1 | Celanex 2300 GV1/30, Fa. Celanese, USA |
| Polybutylenterephtalat 2 | Celanex 2500, Fa. Celanese, USA |
| Polyamid 6.6 | Ultramid A3, Fa. BASF |
| Polyamid 6 | Zytel 7301, Fa. DuPont |
| Polystyrol | Polystyrol 143 E, Fa. BASF |
| Glasfasern 1 | Vetrotex EC 10 983, 4,5 mm, Fa. Saint Gobain |
| Glasfasern 2 | Chop Vantage 3540, PPG |

Tabelle 1

| Beispiel | | 1 (Vgl) | 2 (Vgl) | 3 | 4 | 5 |
|---|---|---|---|---|---|---|
| Diethylphosphinsäure-Al-Salz | Mol-% | 87,2 | 90,8 | 98,6 | 96,5 | 93,9 |
| Ethylbutylphosphinsäure-Al-Salz | Mol-% | 11,9 | 8,4 | 0,9 | 2,7 | 5,5 |
| Ethylphosphonsäure-Al-Salz | Mol% | 0,9 | 0,8 | 0,5 | 0,8 | 0,6 |
| Rest-Acetat | Gew.-% | 0,88 | 0,45 | 0 | 0 | 0 |

Tabelle 2

| Beispiel | | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|
| Produkt aus Beispiel 1 | Gew.-% | | 25 | | | | | 12 | | | 11,4 | | | | |
| Produkt aus Beispiel 2 | Gew.-% | | | 25 | | | | | | | | | | | |
| Produkt aus Beispiel 3 | Gew.-% | | | | 25 | | | | 12 | | | 11,4 | | | |
| Produkt aus Beispiel 4 | Gew.-% | | | | | 25 | | | | | | | 11,4 | 12 | 30 |
| Produkt aus Beispiel 5 | Gew.-% | | | | | | 25 | | | | | | | | |
| Melaminpolyphosphat | Gew.-% | | | | | | | | | | 5,7 | 5,7 | 5,7 | 6 | |
| Melamincyanurat | Gew.-% | | | | | | | 6 | 6 | | | | | | |
| Zinkborat | Gew.-% | | | | | | | | | | 0,9 | 0,9 | 0,9 | | |
| Zinkoxid | Gew.-% | | | | | | | | | | | | | | |
| Polybutylenterephtalat 1 | Gew.-% | 100 | 75 | 75 | 75 | 75 | 75 | | | | | | | | |
| Polybutylenterephtalat 2 | Gew.-% | | | | | | | 52 | 52 | | | | | | |
| Polyamid 6.6 | Gew.-% | | | | | | | | | 70 | 52 | 52 | 52 | | |
| Polyamid 6 | Gew.-% | | | | | | | | | | | | | 52 | |
| Polystyrol | Gew.-% | | | | | | | | | | | | | | 70 |
| Glasfasern 1 | Gew.-% | | | | | | | 30 | 30 | 30 | 30 | 30 | 30 | | |
| Glasfasern 2 | Gew.-% | | | | | | | | | | | | | 30 | |
| Viskositätszahl | - | 1072 | 719 | 758 | 1023 | 1034 | 995 | 716 | 1005 | - | - | - | - | - | - |
| Melt Flow Index, 275°C, 2 | cm3/min | - | - | - | - | - | - | - | - | 5,8 | 16,7 | 4,1 | 5,6 | 4,9 | - |
| UL-94-Klassifizierung | - | nkl | V-2 | V-2 | V-0 | V-0 | V-0 | V-1 | V-0 | nkl | V-2 | V-0 | V-0 | V-0 | V-0 |

**Patentansprüche**

1. Verwendung von Dialkylphosphinsäuresalzen der Formel (I)

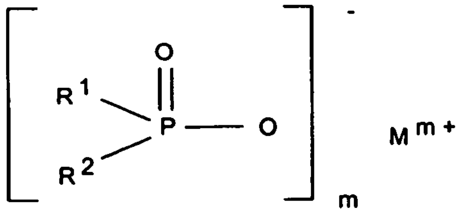

(I)

worin

$R^1$, $R^2$ gleich oder verschieden sind und $C_1$-$C_6$-Alkyl, linear oder verzweigt
M Mg, Ca, Al, Sb, Sn, Ge, Ti, Fe, Zr, Zn, Ce, Bi, Sr, Mn, Li, Na, K und/oder eine protonierte Stickstoffbase;
m 1 bis 4 bedeuten und deren Telomeren-Gehalt 0,01 bis 6 Gew.-%

beträgt und wobei es sich bei den Telomeren um Ethyl-Butylphosphinsäure-Salze, Butyl-Butylphosphinsäure-Salze, Ethyl-Hexylphosphinsäure-Salze, Butyl-Hexylphosphinsäure-Salze und/oder Hexyl-Hexylphosphinsäure-Salze handelt, als Flammschutzmittel.

2. Verwendung von Dialkylphosphinsäuresalzen nach Anspruch 1, **dadurch gekennzeichnet, dass** M Aluminium, Calcium, Titan, Zink, Zinn oder Zirkonium bedeutet.

3. Verwendung von Dialkylphosphinsäuresalzen nach Anspruch 1 oder 2, **dadurch gekennzeichnet, dass** $R^1$, $R^2$ gleich oder verschieden sind und Methyl, Ethyl, n-Propyl, iso-Propyl, n-Butyl, iso-Butyl, tert.-Butyl, n-Pentyl, iso-Pentyl, n-Hexyl und/oder iso-Hexyl bedeuten.

4. Verwendung von Dialkylphosphinsäuresalzen nach einem oder mehreren der Ansprüche 1 bis 3, **dadurch gekennzeichnet, dass** es sich bei den Dialkylphosphinsäuresalzen um solche aus der Gruppe Aluminiumtrisdiethylphosphinat, Zinkbisdiethylphosphinat, Titanylbisdiethylphosphinat, Titantetrakisdiethylphosphinat und beliebige Mischungen davon handelt.

5. Flammschutzmittelzusammensetzung, **dadurch gekennzeichnet, dass** sie mindestens ein Dialkylphosphinsäuresalz der Formel (I) gemäß Anspruch 1 enthält.

6. Flammschutzmittelzusammensetzung nach Anspruch 5, **dadurch gekennzeichnet, dass** sie 50 bis 99,9 Gew.-% mindestens eines Dialkylphosphinsäuresalzes der Formel (I) und 0,1 bis 50 Gew.-% mindestens eines Additives enthält.

7. Flammschutzmittelzusammensetzung nach Anspruch 5 oder 6, **dadurch gekennzeichnet, dass** sie 95 bis 70 Gew.-% mindestens eines Dialkylphosphinsäuresalzes der Formel (I) und 5 bis 30 Gew.-% mindestens eines Additives enthält.

8. Flammschutzmittelzusammensetzung nach Anspruch 6 oder 7, **dadurch gekennzeichnet, dass** die Additive aus der Gruppe Melaminphosphat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat, Melaminpolyphosphat, Melampolyphosphat, Melempolyphosphat und/oder Melonpolyphosphat entstammen.

9. Flammschutzmittelzusammensetzung nach Anspruch 6 oder 7, **dadurch gekennzeichnet, dass** die Additive aus der Gruppe oligomere Ester des Tris(hydroxyethyl)isocyanurats mit aromatischen Polycarbonsäuren, Benzoguanamin, Tris(hydroxyethyl)isocyanurat, Allantoin, Glycouril, Melamin, Melamincyanurat, Harnstoffcyanurat, Dicyandiamid und/oder Guanidin entstammen.

10. Flammschutzmittelzusammensetzung nach Anspruch 6 oder 7, **dadurch gekennzeichnet, dass** die Additive aus

der Gruppe der Zinkverbindungen wie Zinkoxid, Zinkhydroxid, Zinkoxidhydrat, Zinkcarbonat, Zinkstannat, Zinkhydroxystannat, Zink-Silikat, Zinkphosphat, Zinkborat, Zinkmolybdat entstammen.

**11.** Flammschutzmittelzusammensetzung nach Anspruch 6 oder 7, **dadurch gekennzeichnet, dass** die Additive aus der Gruppe der Carbodiimide und/oder (Poly-)isocyanate, wie Carbonylbiscaprolactam und/oder Styrol-Acryl-Polymere entstammen.

**12.** Flammgeschützte Polymerformmasse, **dadurch gekennzeichnet, dass** sie 1 bis 50 Gew.-% Dialkylphosphinsäuresalze der Formel (I) gemäß Anspruch 1 oder eine Flammschutzmittel-Zusammensetzung nach mindestens einem der Ansprüche 5 bis 11,
1 bis 99 Gew.-% Polymer oder Mischungen derselben,
0 bis 60 Gew.-% Additive,
0 bis 60 Gew.-% Füllstoff
enthält.

**13.** Flammgeschützte Polymerformmasse nach Anspruch 12, **dadurch gekennzeichnet, dass** die Polymere aus der Gruppe der thermoplastischen Polymere wie Polyester, Polystyrol oder Polyamid und/oder der duroplastischen Polymere entstammen.

**14.** Flammgeschützte Polymerformmasse nach Anspruch 12 oder 13, **dadurch gekennzeichnet, dass** die Restfeuchte 0,01 bis 10 Gew.-%, bevorzugt 0,1 bis 1 Gew.-% beträgt.

**15.** Verfahren zur Herstellung von flammgeschützten Polymerformmassen, **dadurch gekennzeichnet, dass** die Dialkylphosphinsäuresalze der Formel (I) gemäß Anspruch 1 und/oder die Flammschutzmittel-Zusammensetzungen nach mindestens einem der Ansprüche 6 bis 11 mit dem Polymergranulat und evtl. Additiven in einem Mischer vermischt werden und in einem Compoundieraggregat unter höheren Temperaturen in der Polymerschmelze homogenisiert werden und anschließend der homogenisierte Polymerstrang abgezogen, gekühlt und portioniert wird.

**16.** Verwendung von Dialkylphosphinsäuresalzen der Formel (I) gemäß Anspruch 1 und/oder der Flammschutzmittel-Zusammensetzungen nach mindestens einem der Ansprüche 6 bis 11 in flammgeschützten Polymer-Formkörpern.

**17.** Flammgeschützte Polymer-Formkörper, -Filme, -Fäden und -Fasern enthaltend
1 bis 50 Gew.-% Dialkylphosphinsäuresalze der Formel (I) gemäß Anspruch 1 und/oder die Flammschutzmittel-Zusammensetzungen nach mindestens einem der Ansprüche 6 bis 11,
1 bis 99 Gew.-% Polymer oder Mischungen derselben
0 bis 60 Gew.-% Additive
0 bis 60 Gew.-% Füllstoff.

**18.** Verfahren zur Herstellung von flammgeschützten Polymer-Formkörpern, **dadurch gekennzeichnet, dass** flammgeschützte Polymer-Formmassen nach Anspruch 17 durch Spritzgießen und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

## Claims

**1.** The use of dialkylphosphinic salts of the formula (I)

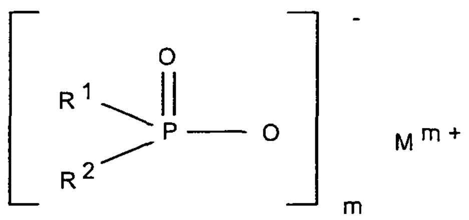

(I)

where

$R^1$, $R^2$ are identical or different and are $C_1$-$C_6$-alkyl, linear or branched
M is Mg, Ca, Al, Sb, Sn, Ge, Ti, Fe, Zr, Zn, Ce, Bi, Sr, Mn, Li, Na, K and/or is a protonated nitrogen base;
m is from 1 to 4 and their the telomer content is from 0.01 to 6% by

weight and the telomers are ethylbutylphospinic salts, butylbutylphosphinic salts, ethylhexylphosphinic salts, butylhexylphosphinic salts, and/or hexylhexylphosphinic salts, as flame retardants.

**2.** The use of dialkylphosphinic salts as claimed in claim 1, wherein M is aluminum, calcium, titanium, zinc, tin, or zirconium.

**3.** The use of dialkylphosphinic salts as claimed in claim 1 or 2, wherein $R^1$ and $R^2$ are identical or different and are methyl, ethyl, n-propyl, isopropyl, n-butyl, isobutyl, tert-butyl, n-pentyl, isopentyl, n-hexyl and/or isohexyl.

**4.** The use of dialkylphosphinic salts as claimed in one or more of claims 1 to 3, which are those from the following group: aluminum tris(diethylphosphinate), zinc bis(diethylphosphinate), titanyl bis(diethylphosphinate), titanium tetrakis(diethylphosphinate), and any desired mixtures of these.

**5.** A flame retardant composition which comprises at least one dialkylphosphinic salt of the formula (I) as claimed in claim 1.

**6.** A flame retardant composition as claimed in claims which comprises from 50 to 99.9% by weight of at least one dialkylphosphinic salt of the formula (I), and comprises from 0.1 to 50% by weight of at least one additive.

**7.** The flame retardant composition as claimed in claim 5 or 6, which comprises from 95 to 70% by weight of at least one dialkylphosphinic salt of the formula (I), and comprises from 5 to 30% by weight of at least one additive.

**8.** The flame retardant composition as claimed in claim 6 or 7, wherein the additives derive from the following group: melamine phosphate, dimelamine phosphate, pentamelamine triphosphate, trimelamine diphosphate, tetrakismelamine triphosphate, hexakismelamine pentaphosphate, melamine diphosphate, melamine tetraphosphate, melamine pyrophosphate, melamine polyphosphate, melam polyphosphate, melem polyphosphate, and/or melon polyphosphate.

**9.** The flame retardant composition as claimed in claim 6 or 7, wherein the additives derive from the following group: oligomeric esters of tris(hydroxyethyl) isocyanurate with aromatic polycarboxylic acids, benzoguanamine, tris(hydroxyethyl) isocyanurate, allantoin, glycouril, melamine, melamine cyanurate, urea cyanurate, dicyandiamide, and/or guanidine.

**10.** The flame retardant composition as claimed in claim 6 or 7, wherein the additives derive from the group of the zinc compounds, such as zinc oxide, zinc hydroxide, zinc oxide hydrate, zinc carbonate, zinc stannate, zinc hydroxystannate, zinc silicate, zinc phosphate, zinc borate, zinc molybdate.

**11.** The flame retardant composition as claimed in claim 6 or 7, wherein the additives derive from the group of the carbodiimides and/or (poly)isocyanates, such as carbonylbiscaprolactam, and/or styrene-acrylic polymers.

**12.** The flame-retardant polymer molding composition, which comprises
from 1 to 50% by weight of dialkylphosphinic salts of the formula (I) as claimed in claim 1 or a flame retardant composition as claimed in at least one of claims 5 to 11,
from 1 to 99% by weight of polymer or mixtures thereof,
from 0 to 60% by weight of additives,
from 0 to 60% by weight of filler.

**13.** The flame-retardant polymer molding composition as claimed in claim 12, wherein the polymers derive from the group of the thermoplastic polymers, such as polyesters, polystyrene, or polyamide, and/or of the thermoset polymers.

**14.** The flame-retardant polymer molding composition as claimed in claim 12 or 13, wherein the residual moisture level is from 0.01 to 10% by weight, preferably from 0.1 to 1% by weight.

15. A process for preparation of flame-retardant polymer molding compositions, which comprises mixing the dialkylphosphinic salts of the formula (I) as claimed in claim 1 and/or the flame retardant compositions as claimed in at least one of claims 6 to 11 with the polymer pellets and optionally additives in a mixer, and homogenizing them in the polymer melt at relatively high temperatures in a compounding assembly, and then drawing off the homogenized polymer extrudate, cooling it, and dividing it into portions.

16. The use of dialkylphosphinic salts of the formula (I) as claimed in claim 1 and/or the flame retardant compositions as claimed in at least one of claims 6 to 11 in flame-retardant polymer moldings.

17. A flame-retardant polymer molding, flame-retardant polymer film, flame-retardant polymer filament, or flame-retardant polymer fiber comprising
from 1 to 50% by weight of dialkylphosphinic salts of the formula (I) as claimed in claim 1 and/or the flame retardant compositions as claimed in at least one of claims 6 to 11,
from 1 to 99% by weight of polymer or a mixture of the same
from 0 to 60% by weight of additives
from 0 to 60% by weight of filler.

18. A process for production of flame-retardant polymer moldings, which comprises processing flame-retardant polymer molding compositions as claimed in claim 17 via injection molding and compression molding, foam injection molding, internal gas pressure injection molding, blow molding, cast-film production, calendering, laminating, or coating at relatively high temperatures to give the flame-retardant polymer molding.

**Revendications**

1. Utilisation de sels d'acides dialkylphosphiniques

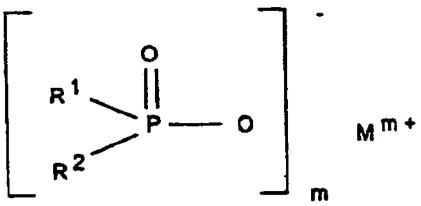

(I)

dans lesquels

$R^1$, $R^2$ sont identiques ou différents et représentent un alkyle en $C_1$ à $C_6$, linéaire ou ramifié ;
M représente Mg, Ca, Al, Sb, Sn, Ge, Ti, Fe, Zr, Zn, Ce, Bi, Sr, Mn, Li, Na, K et/ou une base azotée protonée ;
m représente 1 à 4 et leur teneur en télomères est de 0,01 à 6 % en poids et dans lesquels il s'agit pour les télomères des sels de l'acide éthyl-butylphosphinique, des sels de l'acide butyl-butylphosphinique, des sels de l'acide éthyl-hexylphosphinique, des sels de l'acide butyl-hexylphosphinique et/ou des sels de l'acide hexyl-hexylphosphinique, comme agents pare-flammes.

2. Utilisation de sels d'acides dialkylphosphiniques selon la revendication 1, **caractérisée en ce que** M représente l'aluminium, le calcium, le titane, le zinc, l'étain ou le zirconium.

3. Utilisation de sels d'acides dialkylphosphiniques selon la revendication 1 ou 2, **caractérisée en ce que** $R^1$, $R^2$ sont identiques ou différents et représentent un méthyle, éthyle, n-propyle, iso-propyle, n-butyle, iso-butyle, tert.-butyle, n-pentyle, iso-pentyle, n-hexyle et/ou iso-hexyle.

4. Utilisation de sels d'acides dialkylphosphiniques selon une ou plusieurs des revendications 1 à 3, **caractérisée en ce qu'**il s'agit pour les sels d'acides dialkylphosphiniques de ceux du groupe trisdiéthylphosphinate d'aluminium, bisdiéthylphosphinate de zinc, bisdiéthylphosphinate de titanyle, tétrakisdiéthylphosphinate de titane et des mélanges quelconques d'entre eux.

5. Composition d'agents pare-flammes, **caractérisée en ce qu'**elle contient au moins un sel d'acide dialkylphosphinique de formule (I) selon la revendication 1.

6. Composition d'agents pare-flammes selon la revendication 1, **caractérisée en ce qu'**elle contient 50 à 99,9 % en poids d'au moins un sel d'acide dialkylphosphinique de formule (I) selon la revendication 1 et 0,1 à 50 % en poids d'au moins un additif.

7. Composition d'agents pare-flammes selon la revendication 5 ou 6, **caractérisée en ce qu'**elle contient 95 à 70 % en poids d'au moins un sel d'acide dialkylphosphinique de formule (I) et 5 à 30 % en poids d'au moins un additif.

8. Composition d'agents pare-flammes selon la revendication 6 ou 7, **caractérisée en ce** les additifs proviennent du groupe phosphate de mélamine, phosphate de dimélamine, triphosphate de pentamélamine, diphosphate de trimélamine, triphosphate de tétrakismélamine, pentaphosphate d'hexakismélamine, diphosphate de mélamine, tétraphosphate de mélamine, pyrophosphate de mélamine, polyphosphate de mélamine, polyphosphate de melam, polyphosphate de melem et/ou polyphosphate de melon.

9. Composition pare-flammes selon la revendication 6 ou 7, **caractérisée en ce** les additifs proviennent du groupe des esters oligomères du tris(hydroxyéthyl)isocyanurate avec des acides polycarboxyliques aromatiques, la benzoguanamine, le tris(hydroxyéthyl)isocyanurate, l'allantoïne, le glycourile, la mélamine, le cyanurate de mélamine, le cyanurate d'urée, le dicyandiamide et/ou la guanidine.

10. Composition d'agents pare-flammes selon la revendication 6 ou 7, **caractérisée en ce** les additifs proviennent du groupe des composés du zinc comme l'oxyde de zinc, l'hydroxyde de zinc, l'oxyhydrate de zinc, le carbonate de zinc, le stannate de zinc, l'hydroxystannate de zinc, le silicate de zinc, le phosphate de zinc, le borate de zinc, le molybdate de zinc.

11. Composition d'agents pare-flammes selon la revendication 6 ou 7, **caractérisée en ce** les additifs proviennent du groupe des carbodiimides et/ou des (poly-)isocyanates, comme le carbonylbiscaprolactame et/ou des polymères styrène-acrylique.

12. Matière polymère à mouler pare-flammes, **caractérisée en ce qu'**elle contient 1 à 50 % en poids de sels d'acides dialkylphosphiniques de formule (I) selon la revendication 1 ou une composition d'agents pare-flammes selon au moins une des revendications 5 à 11,
1 à 99 % en poids de polymère ou de mélanges de ceux-ci,
0 à 60 % en poids d'additifs,
0 à 60 % en poids de charge.

13. Matière polymère à mouler pare-flammes selon la revendication 12, **caractérisée en ce que** les polymères proviennent du groupe des polymères thermoplastiques comme le polyester, le polystyrène ou le polyamide et/ou les polymères duroplastes.

14. Matière polymère à mouler pare-flammes selon la revendication 12 ou 13, **caractérisée en ce que** l'humidité résiduelle est de 0,01 à 10 % en poids, de préférence de 0,1 à 1 % en poids.

15. Procédé de préparation de matières polymères à mouler pare-flammes, **caractérisé en ce que** les sels d'acides dialkylphosphiniques de formule (I) selon la revendication 1 et/ou les compositions d'agents pare-flammes selon au moins une des revendications 6 à 11 sont mélangés dans un mélangeur avec les granulés de polymère et les éventuels additifs et sont homogénéisés dans un appareil à faire des composés à des températures supérieures dans le polymère en fusion et ensuite l'écheveau de polymère homogénéisé est étiré, refroidi et partagé en portions.

16. Utilisation de sels d'acides dialkylphosphiniques de formule (I) selon la revendication 1 et/ou de compositions d'agents pare-flammes selon au moins une des revendications 6 à 11 dans des corps polymères moulés.

17. Corps moulés, films, fils et fibres polymères pare-flammes contenant
1 à 50% en poids de sels d'acides dialkylphosphiniques de formule (I) selon la revendication 1 et/ou les compositions d'agents pare-flammes selon au moins une des revendications 6 à 11,
1 à 99 % en poids de polymère ou de mélanges de celui-ci,
0 à 60 % en poids d'additifs,

0 à 60 % en poids de charge.

**18.** Procédé pour la préparation de corps moulés polymères pare-flammes, **caractérisé en ce que** l'on transforme des matières polymères à mouler pare-flammes selon la revendication 17 par moulage par injection et pressage, moulage par injection de mousse, moulage par injection par pression de gaz interne, soufflage sur matrice, coulage en feuille, calandrage, laminage ou revêtement à des températures supérieures en corps moulés polymères pare-flammes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 9928327 A
- DE 2827867 A
- DE 19933901 A
- DE 19614424 A
- DE 19734437 A
- WO 9616948 A
- WO 9839306 A
- WO 9845364 A
- WO 9808898 A
- EP 1024167 A
- DE 19920276 A, BASF